# EUROPEAN PATENT SPECIFICATION

(11) **EP 4 297 886 B1**
(45) Date of publication and mention of the grant of the patent: **11.12.2024**
(21) Application number: 22710862.8
(22) Date of filing: 25.02.2022
(51) Int. Cl.: B01D 46/00, F02M 35/00

(54) **A PLASTIC CONNECTOR AND AIR CLEANER SYSTEM WITH AIR CLEANERS IN PARALLEL CONNECTION USING THE SAME**
KUNSTSTOFFVERBINDER UND LUFTREINIGERSYSTEM MIT PARALLEL GESCHALTETEN LUFTREINIGERN DAMIT
CONNECTEUR EN MATIÈRE PLASTIQUE ET SYSTÈME D'ÉPURATEUR D'AIR AVEC ÉPURATEURS D'AIR EN CONNEXION PARALLÈLE L'UTILISANT

(30) Priority: 26.02.2021 CN 202110213785
(43) Date of publication of application: 03.01.2024
(73) Proprietor: DONALDSON COMPANY, INC., Bloomington, MN 55431 (US)
(72) Inventor: WANG, Shirong, Bloomington, MN 55431 (US)
(74) Representative: IPLodge bv
(86) International application number: PCT/US2022/018011
(87) International publication number: WO 2022/183059

(56) References cited:
- CN-A- 110 873 010
- US-A1- 2017 254 301
- US-A1- 2020 324 237
- US-B2- 8 343 247

## Description

This application is being filed on February 25, 2022, as a PCT International Patent application and claims the priority to Chinese Patent Application No. 202110213785.0, filed February 26, 2021.

### Field of Invention

The present invention relates to air filtration field, especially relates to a plastic connector for dual air cleaners and an air cleaner system with air cleaners in parallel connection bonded with the plastic connector.

### Background

Air cleaners are used to filter various impurities in the air, to ensure clean air into the engine. Typically, air flow rate of the air cleaner needs to match with air flow rate of the engine. In practice, sometimes there will be occasions that the air flow rate of the air cleaner is relatively small while the air flow rate of the engine is relatively large, causing the two not matching with each other. To address the issue, one solution used is to have several (e.g., two (2)) air cleaners with smaller air flow rate in parallel connection as one unitary product, to match with the engine having larger air flow rate. Such solution is widely used in the air cleaner industry due to its flexibility and low costs.

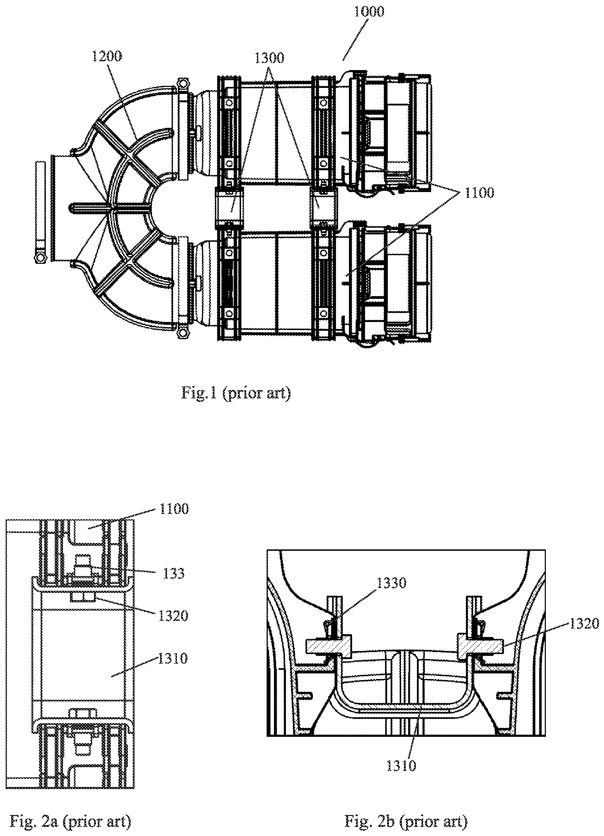

As an example, Figs. 1-2b show a dual air cleaner system that is currently used. As shown in the drawings, the air cleaner system 1000 includes two air cleaners 1100 in parallel connection, a Y-shaped outlet duct 1200 connected with one end of each air cleaners 1100, and a connector 1300 securing the two air cleaners 1100 together. In the example, two ports of the Y-shaped outlet duct 1200 are connected to respective outlets of the two air cleaners 1100, and the third one leads to the engine. A metal connector 1300 composed of a U-shaped metal plate 1310, metal screws 1320 and metal nuts 1330 is adopted to bond the two air cleaners 1100 together.

However, using metal connectors to bond the air cleaners is high in material costs and processing costs. Also, due to space constraint, assembly will become difficult. In addition, coupling of the metal connector and the air cleaner housing is rigid connection. As there is dimensional tolerance between the mounting surface of and the mounting bracket of the air cleaner, issues with respect to flatness and position accuracy between mounting point and mounting bracket of the air cleaner may occur, which may cause the air cleaners in parallel connection to have larger stress when installed, greatly impacting durability of the air cleaners.

Therefore, there is always a need for a novel connector that can secure a plurality of air cleaners in parallel connection together. Such connector can reduce costs, facilitate installation, and have certain ability to self-adjust flatness and position between mounting point and mounting bracket of the air cleaner. A suitable connector is known from CN110873010 A. Air filters with snap connectors are disclosed in US8343247 B2 and US2020/324237 A1

### Summary

In view of above, an objective of the present invention is to provide a connector for securing a plurality of air cleaners together, to address the issues in connection with high costs, complex installation and less durability of air cleaners due to rigid connection. The present invention adopts the following technical solutions.

In one aspect, the present invention provides a plastic connector for securing air cleaners in parallel connection, including a connector body and a fastener. The connector body has guide rails and frame legs; and the fastener has openings and fastener arms. The openings of the fastener are in snap-fit with the guide rails of the connector body, to enable the connector body and the fastener assembled into the plastic connector. The fastener can slide along the guide rails under force.

Preferably, the openings are in square shape, to match with a cross-section of the guide rails.

The fastener is elastic.

Preferably, the connector body further comprises body position limiters extending outwardly from the guide rails to prevent the fastener detaching from the connector body due to deformation.

Preferably, the body position limiter has a curvature that matches with a curvature of a curved side of the fastener, to prevent the fastener detaching from the connector body by pressing against the curved side of the fastener.

Preferably, the fastener further has fastener position limiters extending transversely at certain angle inside the fastener and located under the openings, to press against the guide rails when the plastic connector is pulled, to prevent the fastener arms from popping out of the mounting holes of the mounting bracket so that the plastic connector accidentally got loosened.

Preferably, the fastener has a pair of fastener position limiters extending transversely inside the fastener at certain angle in opposite directions from center of opposite sides of the fastener, respectively.

Preferably, the fastener arms extend outwardly from opposite sides along a short axis of the fastener, with a lead-in angle at an end of the fastener arm.

In another aspect, the present invention provides an air cleaner system with air cleaners in parallel connection using a plurality of plastic connectors, including two or more air cleaners, a multi-branch outlet duct connected to an outlet end of respective air cleaners and any one of the foregoing plastic connector mounted onto mounting brackets.

Preferably, when the plastic connector is directly pressed into the mounting bracket by hand, the fastener arms, guided by the lead-in angle, insert into corresponding mounting holes on the mounting bracket, and the frame legs also insert into their corresponding mounting holes on the mounting bracket, so as to secure the air cleaners in parallel connection.

The present invention adopts a two-piece plastic connector assembly to connect and secure air cleaners in parallel connection. Comparing with the existing method for securing dual air cleaners, such as by way of metal connectors, the present invention has advantages, including:
1. low plastic costs and low injection molding process costs;
2. push-to-lock the connector by hand, which is efficient and convenient, with no tools needed; and
3. after the plastic connector is installed onto the mounting bracket of the air cleaners in parallel connection, due to flexibility of the plastics, the air cleaners in parallel connection can make minor adjustment, to self-adapt dimensional deviation between the mounting surface and the mounting bracket of the air cleaner, and to reduce installation stress of the air cleaners in parallel connection, which facilitates durability of the air cleaners.

This summary is an overview of some of the teachings of the present application and is not intended to be an exclusive or exhaustive treatment of the present subject matter. Further details are found in the detailed description and appended claims. Other aspects will be apparent to persons skilled in the art upon reading and understanding the following detailed description and viewing the drawings that form a part thereof, each of which is not to be taken in a limiting sense. The scope herein is defined by the appended claims.

### Brief Description of the Drawings

In order to more clearly illustrate the technical solution of the embodiments of the present invention, brief description of the accompanying drawings is provided below. It would be obvious that the accompanying drawings described below are only some embodiments of the present invention. For ordinary technicians in the field, other embodiments can be obtained according to these embodiments without any creative work.
Fig. 1 is a schematic view of a dual air cleaner system using metal connectors in prior art.
Figs. 2a-2b are enlarged views of the metal connector as shown in Fig. 1.
Fig. 3 is a schematic view of a dual air cleaner system using plastic connectors according to one embodiment of the present invention.
Figs. 4a-4c are schematic views of the plastic connector as shown in Fig. 3.
Fig. 5 is a schematic view of the connector body of the plastic connector.
Figs. 6a-6b are schematic views of the fastener of the plastic connector.
Fig. 7 is a partial cross-sectional view of a dual air cleaner system before pushing down the plastic connector.
Fig. 8 is a partial cross-sectional view of a dual air cleaner system after pushing down the plastic connector.

### Detailed Description

In order to elaborate the objectives, technical solutions and advantages of the present invention, detailed description is provided in connection with the accompanying drawings and embodiments. It should be understood that the specific embodiments described herein are only for illustrative and not restrictive.

In an exemplary embodiment, the present invention relates to an air cleaner system with air cleaners in parallel connection using plastic connector(s) for bonding, comprising two or more air cleaners, an air outlet multi-branch tube and plastic connectors.

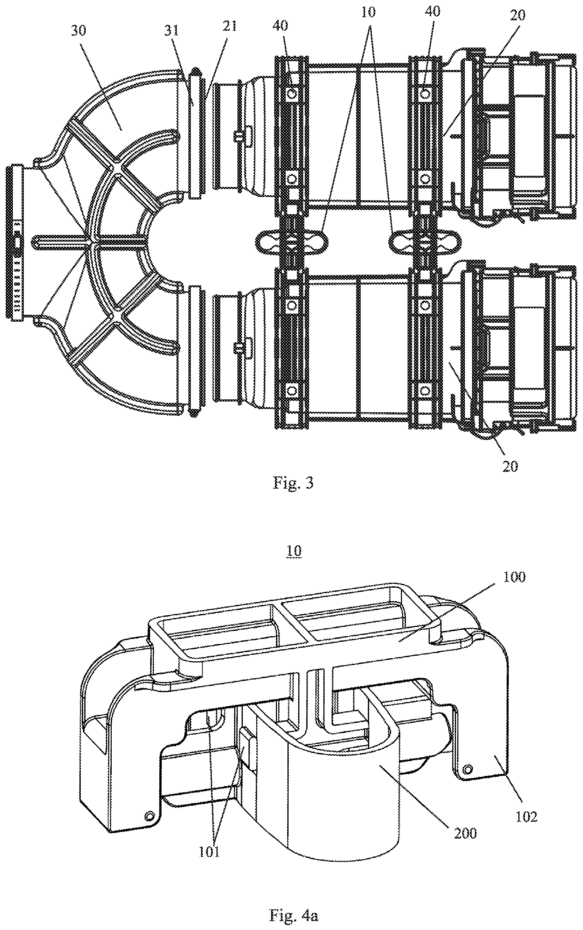

Fig. 3 shows a dual air cleaner system. As shown, air outlet ends 21 of respective air cleaners 20 are in parallel connection through corresponding ports of an Y-shaped outlet duct 30, and the other port of the Y-shaped outlet duct 30 leads to an engine. In this embodiment, the Y-shaped outlet duct 30 is fixed to the air outlet end 21 of respective air cleaner 20 through a clamp 31 at the port.

In addition, there are four plastic connectors 10 provided between the two air cleaners 20. When the dual air cleaner system is positioned in a direction as shown in Fig. 3, only two plastic connectors 10 are visible, one at left side and one at right side. The plastic connectors 10 are installed on corresponding mounting bracket 40 of the air cleaner 20, respectively, for connecting and securing the two air cleaners 20. Number of the plastic connectors 10 used for the air cleaner system with air cleaners in parallel connection can be adjusted based on the size and shape of specific cleaners and operating condition, etc.

Attention now is directed to Fig. 4a, which shows a structural perspective view of the plastic connector 10 according to the present invention. The plastic connector 10 comprises a connector body 100 and a fastener 200, the two in snap-fit to constitute the connector assembly. Preferably, the connector body 100 and the fastener 200 each are prepared by injection molding process. In one embodiment, the connector body 100 can use nylon plus glass fiber material, while the fastener 200 can use POM (acetal resin) material. In another embodiment, both of the connector body 100 and the fastener 200 can use PP (polypropylene) plus glass fiber material, to further reduce costs.

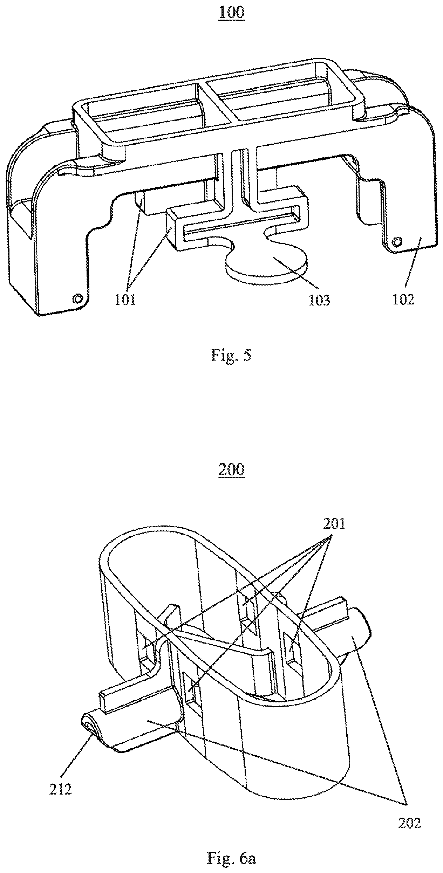

The connector body 100, as shown in Fig. 5, comprises guide rails 101, frame legs 102 and body position limiters 103, symmetrically positioned. The frame legs 102 are respectively located at two sides of the connector body 100. When pressing down the plastic connector 10, the frame legs 102 will be pushed into mounting holes of the mounting brackets.

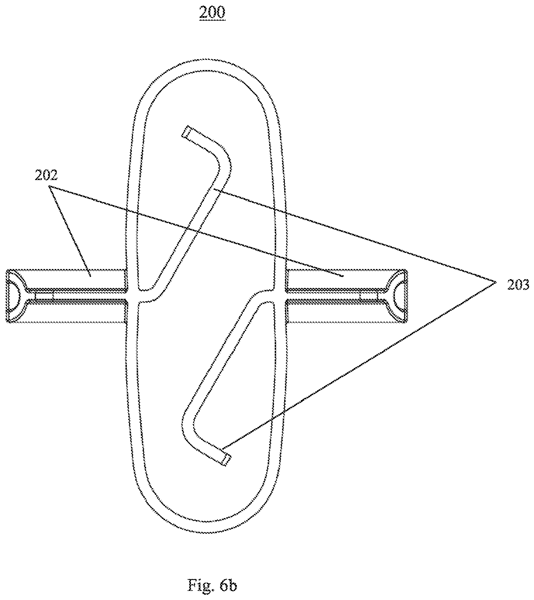

The fastener 200, as shown in Figs. 6a-6b, is preferably in oblong shape, such as O shape, with certain elasticity (or flexibility), and can be deformed under pressure. In this embodiment, the oblong/O shape exhibits a pair of generally parallel straight sides coupled with a pair of opposite curved sides, when no external force is applied. Of course, other shapes suitable for the present invention are also possible.

The fastener 200 has openings 201 on the generally straight sides. In the embodiment, four (4) openings 201 are shown, two on each side, symmetrically arranged along the short axis of the oblong fastener. Number of the openings 201 and distances therebetween match the guide rails 101 of the connector body 100. In addition, the openings 201 shown in this embodiment are in square shape, to facilitate holding the guide rails 101. It shall be noted that other shapes of the openings are also possible, as long as the shape of openings would match the shape of the guide rails 101 so that the guide rails can slide therethrough.

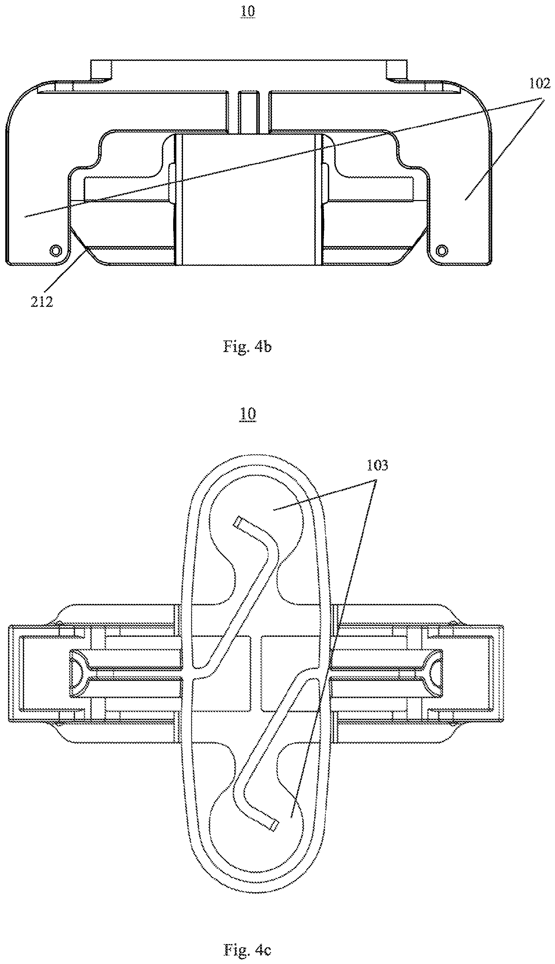

When the connector body 100 is in snap-fit with the fastener 200, the fastener 200 will deform to expand under the force, until the guide rails 101 of the connector body 100 snap into the openings 201 of the fastener 200. Here, the guide rails 101 pass through the openings 201 (see Fig. 4a), and the fastener 200 having the openings 201 can expand and contract along the guide rails 101 as force applies. For different views of the connector body 100 in snap-fit with the fastener 200, please see Figs. 4b-4c.

In order to prevent the fastener 200 unintentionally detaching from the connector body 100 upon buckled (for instance, the guide rails 101 departs from the openings 201 due to deformation of the fastener 200), the connector body 100 further is provided with body position limiters 103 extending outwardly from the guide rails 101. In the embodiment, the body position limiters 103 are generally round, as shown in Fig. 4c, the curvature of which approximately matches with that of the curved sides of the fastener 200. The body position limiters 103 press against the curved sides of the fastener 200 to prevent further deformation of the fastener 200, so as to prevent the fastener 200 unintentionally detaching from the connector body 100.

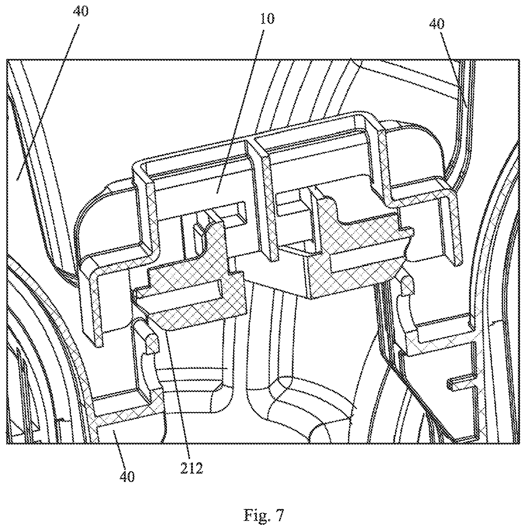

The fastener 200 further has fastener arms 202, as shown in Figs. 6a-6b, which preferably extend outwardly along the short axis of the fastener 200. Preferably, the fastener arm 202 has a lead-in angle 212 (see also Fig. 4b). In this embodiment, the lead-in angle is about 50 degrees. Preferably, the lead-in angle can be in the range of 30°-60°. Upon the fastener 200 in snap-fit with the connector body 100 to assemble into the connector 10, the connector 10 is then installed onto the mounting bracket by pressing. Under the push-down force, the elastic fastener 200 contracts, with the guide of the lead-in angle 212 on the fastener 200, the fastener arms 202 and frame legs 102 would insert into respective mounting holes on the mounting bracket. See Figs. 7-8.

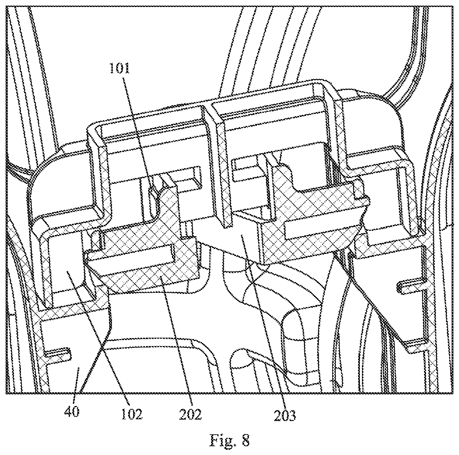

The fastener 200 further has fastener position limiters 203, extending transversely at certain angle inside the O-shaped fastener 200, and located under the openings 201. In this embodiment, there are two fastener position limiters 203 extending in opposite directions from respective fastener arms 202 at an angle inside the O-shaped fastener 200. When there is a pulling force on the connector 10, the fastener position limiters 203 will press against the guide rails 101 of the connector body 100 (Fig. 8), to prevent the fastener arms 202 popping out of the mounting holes of the mounting bracket 40 so that the connector 10 would accidentally got loosened.

Figs. 7-8 schematically show position of connector 10 relative to mounting bracket 40 before and after pushing down the connector 10 to lock onto the mounting bracket 40. For clarity, Figs. 7-8 are shown in cross sectional views. During installation, the two air cleaners are placed side by side, and the connector 10 is push to lock by hand. Here, the lead-in angle 212 on the elastic fastener 200 generates an inward component force on the mounting bracket 40, and the elastic fastener 200 contracts inwardly under such component force. The connector 10 continues to go downwardly under the push-down force, until the fastener arms 202 of the fastener 200 insert into the mounting holes of the mounting bracket 40 and the frame legs 102 of the connector body 100 also insert into their corresponding mounting holes of the mounting bracket 40. Upon installation, the two air cleaners are secured together. The whole operation process does not need any tool assistance.

The foregoing only shows optimal embodiments of the invention, and does not intend to limit the present invention. Therefore, the protection scope of the invention shall rely on the appended claims.

## Claims

1. A plastic connector (10) for bonding and connecting air cleaners (20), wherein the plastic connector (10) comprises a connector body (100) and a fastener (200);
wherein the connector body (100) has guide rails (101) and frame legs (102), said frame legs being arranged at two sides of the connector body (100); and
wherein the fastener (200) is elastic and is generally oblong shaped, comprising a pair of generally parallel straight sides coupled with a pair of opposite curved sides, and has openings (201) on the generally parallel straight sides and fastener arms (202) extending outwardly along a short axis of the fastener (200); and
wherein the openings (201) of the fastener (200) are in snap-fit with the guide rails (101) of the connector body, so that the connector body (100) and the fastener (200) form the plastic connector (10), and wherein the fastener (200) is slidable along the guide rails (101).

2. The plastic connector according to claim 1, wherein the openings (201) of the fastener (200) are in square shape, to match with the shape of the cross-section of the guide rails (101).

3. The plastic connector according to claim 1 or 2, wherein the connector body (100) further comprises body position limiters (103) extending outwardly from the guide rails (101), to prevent the fastener (200) detaching from the connector body (100) due to deformation.

4. The plastic connector (10) according to claim 3, wherein each of the body position limiters (103) has a curvature that matches with a curvature of a curved side of the fastener (200), to prevent the fastener (200) detaching from the connector body (100) by pressing against the curved side of the fastener (200).

5. The plastic connector according to any of the previous claims, wherein the fastener (200) further has fastener position limiters (203) extending transversely at certain angle inside the fastener (200) and located under the openings (201), to press against the guide rails (101) when the plastic connector (10) is pulled, to prevent the fastener arms (202) from popping out of mounting holes of a mounting bracket (40) so that the plastic connector (10) would accidentally got loosened.

6. The plastic connector according to claim 5, wherein the fastener (200) has a pair of fastener position limiters (203) extending transversely at certain angle inside the fastener (200) in opposite directions from opposite sides of the fastener (200).

7. The plastic connector according to any of the previous claims, wherein the fastener arms (202) extend outwardly from opposite sides along a short axis of the fastener (200), and the fastener arms (202) have lead-in angle (212) at an end.

8. An air cleaner system with air cleaners (20) in parallel connection using a plurality of plastic connectors (10), wherein the air cleaner system includes two or more air cleaners, a multi-branch outlet duct (30) connected to an outlet end (21) of each air cleaner, and a plurality of plastic connectors (10) mounted onto mounting brackets (40), wherein each plastic connector (10) is a plastic connector (10) according to any one of claims 1-7.

9. The air cleaner system with air cleaners (20) in parallel connection according to claim 8, wherein when a plastic connector (10) is mounted onto the mounting bracket (40), the fastener arms (202) insert into corresponding mounting holes of the mounting bracket (40) with a guide by lead-in angle (212) of the fastener arms (202), and the frame legs (102) insert into their corresponding mounting holes of the mounting bracket (40), so as to secure the air cleaners (20) in parallel connection.

10. Use of a plastic connector (10) according to any of claims 1 to 7 for bonding and connecting air cleaners (20).

## Patentansprüche

1. Kunststoffverbinder (10) zum Bonden und Verbinden von Luftreinigern (20), wobei der Kunststoffverbinder (10) einen Verbinderkörper (100) und ein Befestigungsmittel (200) umfasst;
wobei der Verbinderkörper (100) Führungsschienen (101) und Rahmenbeine (102) aufweist, wobei die Rahmenbeine an zwei Seiten des Verbinderkörpers (100) angeordnet sind; und
wobei das Befestigungsmittel (200) elastisch ist und allgemein länglich geformt ist, ein Paar allgemein paralleler gerader Seiten umfasst, die mit einem Paar gegenüberliegender gekrümmter Seiten gekoppelt sind, und Öffnungen (201) an den allgemein parallelen geraden Seiten und Befestigungsmittelarme (202), die sich entlang einer kurzen Achse des Befestigungsmittels (200) nach außen erstrecken, aufweist; und
wobei die Öffnungen (201) des Befestigungsmittels (200) so in die Führungsschienen (101) des Verbinderkörpers einschnappen, dass der Verbinderkörper (100) und das Befestigungsmittel (200) den Kunststoffverbinder (10) bilden, und wobei das Befestigungsmittel (200) entlang der Führungsschienen (101) verschiebbar ist.

2. Kunststoffverbinder nach Anspruch 1, wobei die Öffnungen (201) des Befestigungsmittels (200) eine quadratische Form haben, die mit der Form des Querschnitts der Führungsschienen (101) übereinstimmt.

3. Kunststoffverbinder nach Anspruch 1 oder 2, wobei der Verbinderkörper (100) des Weiteren Körperpositionsbegrenzer (103) umfasst, die sich von den Führungsschienen (101) nach außen erstrecken, um zu verhindern, dass sich das Befestigungsmittel (200) aufgrund von Verformung von dem Verbinderkörper (100) löst.

4. Kunststoffverbinder (10) nach Anspruch 3, wobei jeder der Körperpositionsbegrenzer (103) eine Krümmung aufweist, die mit einer Krümmung einer gekrümmten Seite des Befestigungsmittels (200) übereinstimmt, um zu verhindern, dass sich das Befestigungsmittel (200) von dem Verbinderkörper (100) löst, indem es gegen die gekrümmte Seite des Befestigungsmittels (200) gedrückt wird.

5. Kunststoffverbinder nach einem der vorangehenden Ansprüche, wobei das Befestigungsmittel (200) des Weiteren Befestigungsmittelpositionsbegrenzer (203) aufweist, die sich quer in einem bestimmten Winkel im Inneren des Befestigungsmittels (200) erstrecken und unter den Öffnungen (201) angeordnet sind, um gegen die Führungsschienen (101) zu drücken, wenn an dem Kunststoffverbinder (10) gezogen wird, um zu verhindern, dass die Befestigungsmittelarme (202) aus den Montagelöchern einer Montagehalterung (40) herausspringen, so dass sich der Kunststoffverbinder (10) versehentlich lösen würde.

6. Kunststoffverbinder nach Anspruch 5, wobei das Befestigungsmittel (200) ein Paar Befestigungsmittelpositionsbegrenzer (203) aufweist, die sich quer in einem bestimmten Winkel im Inneren des Befestigungsmittels (200) in entgegengesetzten Richtungen von gegenüberliegenden Seiten des Befestigungsmittels (200) her erstrecken.

7. Kunststoffverbinder nach einem der vorangehenden Ansprüche, wobei sich die Befestigungsmittelarme (202) von gegenüberliegenden Seiten entlang einer kurzen Achse des Befestigungsmittels (200) nach außen erstrecken und die Befestigungsmittelarme (202) an einem Ende einen Einführwinkel (212) aufweisen.

8. Luftreinigersystem mit Luftreinigern (20), die unter Verwendung mehrerer Kunststoffverbinder (10) parallel verbunden sind, wobei das Luftreinigersystem zwei oder mehr Luftreiniger, einen mehrere Abzweigungen umfassenden Auslasskanal (30), der mit einem Auslassende (21) jedes Luftreinigers verbunden ist, und mehrere Kunststoffverbinder (10), die an Montagehalterungen (40) montiert sind, aufweist, wobei jeder Kunststoffverbinder (10) ein Kunststoffverbinder (10) nach einem der Ansprüche 1-7 ist.

9. Luftreinigersystem mit Luftreinigern (20) die parallel verbunden sind, nach Anspruch 8, wobei, wenn ein Kunststoffverbinder (10) an der Montagehalterung (40) montiert wird, die Befestigungsmittelarme (202) in entsprechende Montagelöcher der Montagehalterung (40) mit einer Führung durch einen Einführwinkel (212) der Befestigungsmittelarme (202) eingesetzt werden und die Rahmenbeine (102) in ihre entsprechenden Montagelöcher der Montagehalterung (40) eingesetzt werden, um die Luftreiniger (20), während sie parallel verbunden sind, zu befestigen.

10. Verwendung eines Kunststoffverbinders (10) nach einem der Ansprüche 1 bis 7 zum Bonden und Verbinden von Luftreinigern (20).

## Revendications

1. Connecteur en plastique (10) pour lier et connecter des purificateurs d'air (20), dans lequel le connecteur en plastique (10) comprend un corps de connecteur (100) et un dispositif de fixation (200) ;
dans lequel le corps de connecteur (100) possède des rails de guidage (101) et des pattes d'étrier (102), lesdites pattes d'étrier étant agencées de chaque côté du corps de connecteur (100) ; et
dans lequel le dispositif de fixation (200) est élastique et de forme globalement oblongue, comprenant une paire de côtés droits globalement parallèles couplés à une paire de côtés incurvés opposés, et possède des ouvertures (201) sur les côtés droits globalement parallèles et des bras de dispositif de fixation (202) s'étendant vers l'extérieur le long d'un axe court du dispositif de fixation (200) ; et
dans lequel les ouvertures (201) du dispositif de fixation (200) sont en emboîtement avec les rails de guidage (101) du corps de connecteur, de sorte que le corps de connecteur (100) et le dispositif de fixation (200) forment le connecteur en plastique (10), et dans lequel le dispositif de fixation (200) peut coulisser le long des rails de guidage (101).

2. Connecteur en plastique selon la revendication 1, dans lequel les ouvertures (201) du dispositif de fixation (200) sont de forme carrée, correspondant à la forme de la section transversale des rails de guidage (101).

3. Connecteur en plastique selon la revendication 1 ou 2, dans lequel le corps de connecteur (100) comprend en outre des limiteurs de position de corps (103) s'étendant vers l'extérieur à partir des rails de guidage (101), pour empêcher le dispositif de fixation (200) de se détacher du corps de connecteur (100) en raison d'une déformation.

4. Connecteur en plastique (10) selon la revendication 3, dans lequel chacun des limiteurs de position de corps (103) a une courbure qui correspond à une courbure d'un côté incurvé du dispositif de fixation (200), pour empêcher le dispositif de fixation (200) de se détacher du corps de connecteur (100) en appuyant contre le côté incurvé du dispositif de fixation (200).

5. Connecteur en plastique selon l'une quelconque des revendications précédentes, dans lequel le dispositif de fixation (200) possède en outre des limiteurs de position de dispositif de fixation (203) s'étendant de manière transversale à un certain angle à l'intérieur du dispositif de fixation (200) et situés sous les ouvertures (201), pour appuyer contre les rails de guidage (101) lorsque le connecteur en plastique (10) est tiré, pour empêcher les bras de dispositif de fixation (202) de sortir des trous de montage d'un support de montage (40) et ainsi éviter que le connecteur en plastique (10) ne se desserre accidentellement.

6. Connecteur en plastique selon la revendication 5, dans lequel le dispositif de fixation (200) possède une paire de limiteurs de position de dispositif de fixation (203) s'étendant de manière transversale à un certain angle à l'intérieur du dispositif de fixation (200) dans des sens opposés à partir de côtés opposés du dispositif de fixation (200) .

7. Connecteur en plastique selon l'une quelconque des revendications précédentes, dans lequel les bras de dispositif de fixation (202) s'étendent vers l'extérieur à partir de côtés opposés le long d'un axe court du dispositif de fixation (200), et les bras de dispositif de fixation (202) comportent un angle d'introduction (212) à une extrémité.

8. Système de purificateur d'air avec des purificateurs d'air (20) en connexion parallèle en utilisant une pluralité de connecteurs en plastique (10), dans lequel le système de purificateur d'air comprend deux purificateurs d'air ou plus, un conduit de sortie à plusieurs branches (30) connecté à une extrémité de sortie (21) de chaque purificateur d'air, et une pluralité de connecteurs en plastique (10) montés sur des supports de montage (40), dans lequel chaque connecteur en plastique (10) est un connecteur en plastique (10) selon l'une quelconque des revendications 1 à 7.

9. Système de purificateur d'air avec des purificateurs d'air (20) en connexion parallèle selon la revendication 8, dans lequel, lorsqu'un connecteur en plastique (10) est monté sur le support de montage (40), les bras de dispositif de fixation (202) s'insèrent dans des trous de montage correspondants du support de montage (40) avec un guidage par l'angle d'introduction (212) des bras de dispositif de fixation (202), et les pattes d'étrier (102) s'insèrent dans leurs trous de montage correspondants du support de montage (40), de façon à fixer les purificateurs d'air (20) en connexion parallèle.

10. Utilisation d'un connecteur en plastique (10) selon l'une quelconque des revendications 1 à 7 pour lier et connecter des purificateurs d'air (20).
